# EUROPEAN PATENT APPLICATION

(11) **EP 2 530 270 A1**
(43) Date of publication of application: **05.12.2012**
(21) Application number: 11168057.5
(22) Date of filing: 30.05.2011
(51) Int. Cl.: F01N 9/00, F01N 3/20

(54) **Method for heating an SCR system using two resistive heating elements**

(71) Applicant: Inergy Automotive Systems Research (Société Anonyme), 1120 Bruxelles (BE)
(72) Inventor: Naydenov, Volodia, 1348 Louvain-La-Neuve (BE); Zeller, Guillaume, 1030 Bruxelles (BE); Barzic, Florent, 80637 Munich (DE); Dorneanu, Benone, 7800 Ath (BE)
(74) Representative: de la Bigne, Guillaume Michel Marie

(57) **Abstract**

Method for heating an SCR system using at least two resistive heating elements, according to which each of these resistive elements is powered by a PWM signal, the two PWM signals being at least partly in phase opposition.

## Description

The present application relates to a method for heating an SCR system using two resistive heating elements and also to an SCR system suitable for the application of this method.

Legislation on vehicle and truck emissions stipulates, amongst other things, a reduction in the release of nitrogen oxides NOₓ into the atmosphere. One known way to achieve this objective is to use the SCR (Selective Catalytic Reduction) process which enables the reduction of nitrogen oxides by injection of a reducing agent, generally ammonia, into the exhaust line. This ammonia may derive from the pyrolytic decomposition of an ammonia precursor solution, whose concentration may be the eutectic concentration. Such an ammonia precursor is generally a urea solution.

With the SCR process, the high levels of NOₓ produced in the engine during combustion at optimized efficiency are treated in a catalyst on exiting the engine. This treatment requires the use of the reducing agent at a precise concentration and of extreme quality. The solution is thus accurately metered and injected into the exhaust gas stream where it is hydrolysed before converting the nitrogen oxide (NOₓ) to nitrogen (N₂) and water (H₂O).

In order to do this, it is necessary to equip the vehicles with a tank containing an additive (generally urea) solution and also a device for metering the desired amount of additive and injecting it into the exhaust line.

Since the aqueous urea solution generally used for this purpose (eutectic solution of 32.5 wt% urea in water) freezes at -11°C, it is necessary to provide a heating device to liquefy the solution in order to be able to inject it into the exhaust line in the event of starting in freezing conditions.

Several systems have been provided in the prior art for this purpose. Generally, these systems comprise heating devices that involve either specific heating elements or a bypass of the engine cooling circuit (for example, see Application WO 2006/064001 in the name of the Applicant).

As regards the use of specific heating elements, it is known to put resistive heating elements inside the tank containing the urea solution, and optionally over the urea lines (feed lines and return lines, where appropriate), over the pump, the filter, etc. and other active components of the system.

Patent application EP 11150661.4 in the name of the Applicant describes a tank for storing an SCR additive, said tank being made as two halve shells (preferably injection moulded), the lower one being equipped with means (upstanding pins with slots, grooves, supporting baffles or the like) for fixing at least one resistive heating wire to it. In one embodiment, the wire(s) can be attached or put along a small tube whose fast thawing allows to insure fast feeding of the pump / exhaust system.

It is indeed required to be able to start the SCR system as soon as possible after starting the engine so that the area where the pump sucks is preferably de-iced very quickly. However, it is also required to heat the rest of the tank because otherwise, once the additive in the vicinity of the pump will have been consumed, the rest of the additive inside the tank will remain solid and unavailable.

It would therefore be favorable to have at least two resistive heaters: one covering the pumping area (for instance fixed in or around the liquid trap where the pump is fixed) and one covering the rest of the tank.

However, on a vehicle, the only power source available generally is the battery which supplies around 13.5 volts nominal (generally with a minimum of 9 volts and a maximum of 16 volts, which are general OEM requirements). Hence, the fact of using two heaters which must at least for some time, be functioning together, might lead to such power consumption that other devices onboard the vehicle (lights, heating inside the vehicle, defrosting of the windows...) can no longer function correctly. In this case, the constraints for the SCR Electronic Controller itself are also higher, especially considering the thermal dissipation.

It is known (for instance from US 2009/0061489) to power resistive heaters by means of a PWM signal, which is a square voltage wave, i.e. a train of rectangular power (voltage) pulses having a given duration and amplitude and emitted with a given period. Such a signal (of PWM type) is characterized by its duty cycle, that is to say the ratio of the duration of the pulses to their period, generally expressed in %.

The idea behind the present invention is to use this method for powering two resistive heaters of an SCR system in a way such that the power pulses of both heaters overlap as little as possible, and ideally: do not overlap at all when possible, considering the fact that in some conditions (for instance: when starting the engine in frost conditions), the duty cycle of both heaters will be too high for being able to avoid any overlapping (typically: if the sum of both duty cycles exceeds 100%).

The object of the invention is therefore a method for heating an SCR system using at least two resistive heating elements, according to which each of these resistive elements is powered by a PWM signal, the two PWM signals being at least partly in phase opposition.

The expression "SCR system" is understood to mean a system for the selective catalytic reduction of the NOₓ from the exhaust gases of an internal combustion engine, preferably of a vehicle, using preferably urea as a liquid ammonia precursor.

The term "urea" is understood to mean any, generally aqueous, solution containing urea. The invention gives good results with eutectic water/urea solutions for which there is a quality standard: for example, according to the standard DIN 70070, in the case of the AdBlue^{®} solution (commercial solution of urea), the urea content is between 31.8 % and 33.2 % (by weight) (i.e. 32.5 +/-0.7 wt%) hence an available amount of ammonia between 18.0 % and 18.8 %. The invention may also be applied to the urea/ammonium formate mixtures, also in aqueous solution, sold under the trade name Denoxium™ and of which one of the compositions (Denoxium-30) contains an equivalent amount of ammonia to that of the AdBlue^{®} solution. The latter have the advantage of only freezing from -30°C onwards (as opposed to -11°C), but have the disadvantages of corrosion problems linked to the possible release of formic acid. The present invention is particularly advantageous in the context of eutectic water/urea solutions.

As mentioned previously, SCR systems generally comprise at least one tank for storing the urea solution and also a system for feeding this to the exhaust gases, and which generally comprises active components such as a pump, filter, valve(s), conduits (feed and/or return conduits). The method according to the invention applies to the heaters of any component of such a system, any part of such a component and any combination of such components (or even to a complete SCR system).

The method according to the invention uses at least two separate resistive elements that can be activated (heated) independently. They are preferably connected in parallel to one and the same current source (which does not rule out the possibility of the heating system also comprising one or more other resistive elements connected in series). The fact of connecting the resistors in parallel also makes it easier to diagnose their failure, where necessary (see Application WO 2009/013329 in the name of the Applicant, the content of which is incorporated for this purpose by reference into the present application).

The resistive heating elements may be metallic heating filaments (wires), flexible heaters, (that is to say heaters comprising one or more resistive track(s) affixed to a film or placed between two films (that is to say two substantially flat supports, the material and thickness of which are such that they are flexible)) or any other type of resistive elements that have a shape, size and flexibility suitable for being inserted into and/or wound around the components of the SCR system. For the tank and its base plate (i.e. a mounting plate that integrates at least one and preferably all the active components of the system, namely pump, filter, gauge, etc.), where appropriate, metallic wires or flexible heaters are particularly suitable. The present invention is particularly well suited for metallic heating wires attached inside an injection moulded shell aimed at being part of a urea tank as described above.

Although the at least two heating elements may heat any component(s) of the SCR system, one of them is preferably fixed in the pumping area while the other one covers the rest of the tank. Hence, in a preferred embodiment, the heating elements are heating wires attached inside an injection moulded shell comprising a pump and one of them is fixed in the neighbourhood of the pump.

According to the invention, the heating elements are activated (heated) in freezing conditions and preferably, when the component(s) to be heated are actually in contact with (a substantial amount of) liquid or solid urea. Within the context of the invention, the expression "freezing conditions" is generally understood to mean an ambient temperature below -5°C. This is because, theoretically, eutectic urea solutions begin to freeze around -8°C. However, taking into account their ageing, it is not uncommon for them to begin to freeze around - 5°C.

Therefore, the method of the invention preferably uses at least one temperature sensor and if this sensor detects a temperature less than or equal to a threshold value (for instance equal to -5°C: see above), at least one of the heaters is powered and thereafter or at the same time, the second one is powered too, but with a PWM signal being at least partly in phase opposition with the PWM signal of the first heater whenever possible depending on the heating conditions.

By "at least partly in phase opposition" is meant that the 2 PWM signals have the same frequency but that there is a displacement between or among the waves of both signals. This is generally possible when none of them has a duty cycle of 100%.

The method of the invention preferably comprises optimizing the overlapping between the power pulses of both signals as a function of the respective duty cycles (heating conditions). There can be no overlapping at all if both duty cycles are significantly below 50%, or there can be a total overlapping if at least one of them is close to 100%.

Generally, to ensure the optimized heating performances (minimize the urea defrosting time), the duty cycle of each heater is a function of the power supply voltage received from the vehicle battery to avoid damaging the heaters, and is adapted for each heater according to the temperature in the tank and to the urea level in the tank to allow a fast defrosting around the pump and insure a priming in a shortened time.

In a preferred embodiment, the method also allows reducing the peak current consumption by the SCR system, in order to decrease the current peak to be delivered by the alternator. In this embodiment, a time shift is introduced between the switching on and off of both heaters during each period of the PWM signal. This time shift is preferably optimized based on the duration of the current peaks when switching on/off the heaters. A time shift in the order of the tenths (typically 100) ms gives good results in practice. Hence, the method according to that embodiment allows:
1. To reduce the instantaneous system current consumption
2. To reduce the peak current consumption by the SCR system
3. To ensure the optimized heating performances (minimize the urea defrosting time)
4. To minimize the voltage perturbations
5. Reduce the EMC interferences

The method according to the invention generally uses an electronic control unit (ECU) that makes it possible to specifically activate/deactivate (i.e. supply with current or not) each of the heaters as a function of the information received from the sensor(s) (temperature, level...) and also, as a function of the power (voltage) available on the battery at that time.

It should be noted that there may be more than two separate resistors in the method of the invention, in which case the phase oppositions of the respective signals could be optimized as well.

The present invention is illustrated in a non limitative way by figures 1 to 3 attached, wherein:
- Fig. 1 shows the PWM signals and the current consumption of two heaters which are not powered according to the method of the invention
- Fig. 2 shows the PWM signals and the current consumption of two heaters which are powered according to one embodiment of the invention
- Fig. 3 shows the PWM signals of two heaters which are powered according to another embodiment of the invention.

In these figures, the scales (namely the value of the average current) are only illustrative.

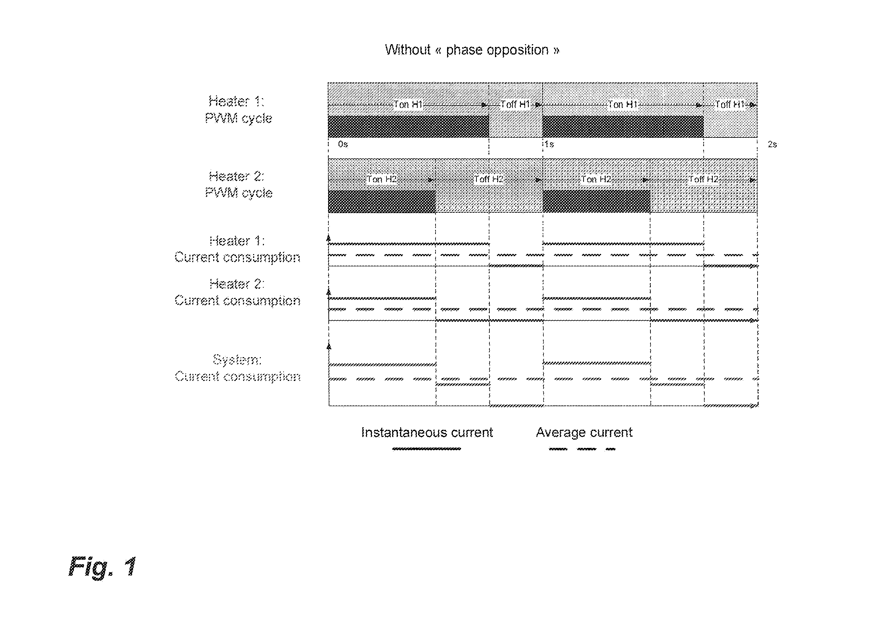

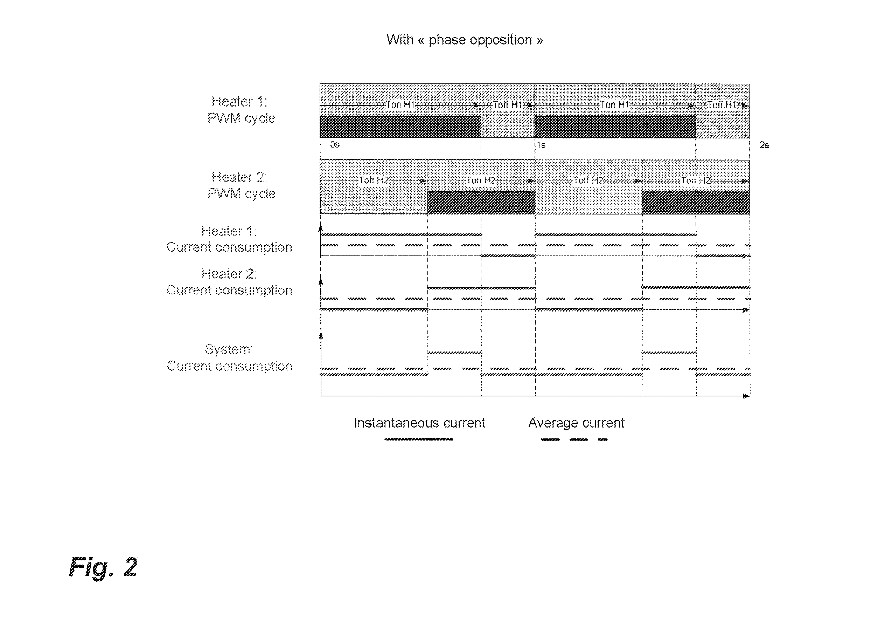

When comparing the instantaneous current consumptions between Fig. 1 and 2, it is quite clear that the method of the inventions allows reducing the time during which the instantaneous consumption is maximal.

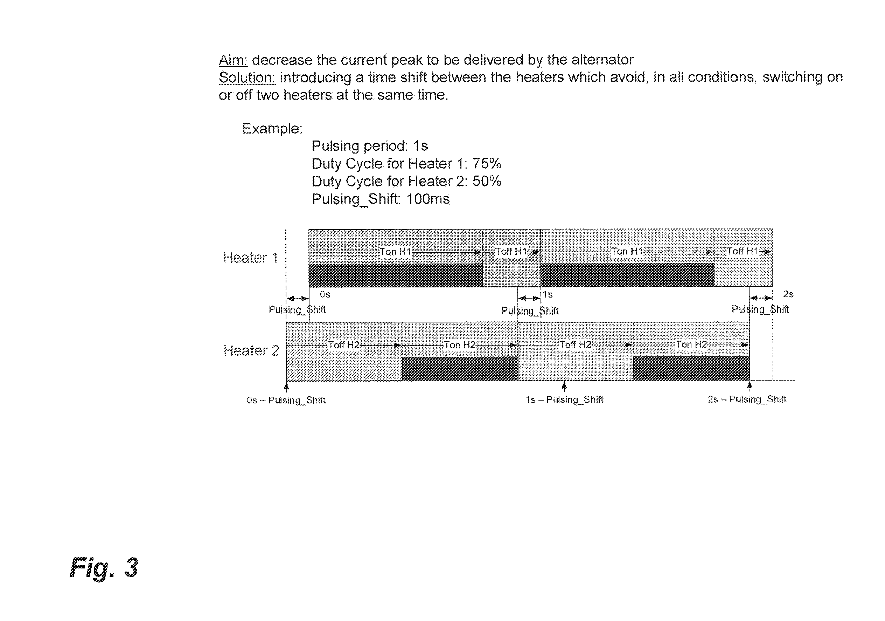

As to Fig. 3, it gives some indicative values for the duty cycles of the heaters, for their pulsing period and the shift time between both PWM signals.

## Claims

1. Method for heating an SCR system using at least two resistive heating elements, according to which each of these resistive elements is powered by a PWM signal comprising power pulses and having a given duty cycle, the two PWM signals being at least partly in phase opposition.

2. Method according to the preceding claim, wherein the heating elements are metallic heating wires attached inside an injection moulded shell aimed at being part of a urea tank.

3. Method according to the preceding claim, wherein the shell comprises a pump and wherein one of the heating wires is fixed in the neighbourhood of the pump.

4. Method according to any one of the preceding claims, which uses at least one temperature sensor and if this sensor detects a temperature less than or equal to a threshold value, at least one of the heaters is powered and thereafter or at the same time, the second one is powered too, but with a PWM signal being at least partly in phase opposition with the PWM signal of the first heater whenever possible depending on the heating conditions.

5. Method according to any of the preceding claims, wherein the overlapping between the power pulses of both PWM signals is optimized as a function of the respective duty cycles (heating conditions).

6. Method according to any one of the preceding claims, wherein a time shift is introduced between the switching on and off of both heaters during each period of the PWM signal.

7. Method according to any of the preceding claim, applied to the urea tank of a vehicle having a battery and wherein the duty cycle of each heater is a function of the power supply voltage received from the battery, and is adapted for each heater according to the temperature and the urea level in the tank.

8. Method according to the preceding claim, using an electronic control unit (ECU) in order to specifically activate/deactivate each of the heaters as a function of information received from sensor(s) and of the power (voltage) available on the battery.
